# EUROPEAN PATENT SPECIFICATION

(11) **EP 4 016 484 B1**
(45) Date of publication and mention of the grant of the patent: **31.12.2025**
(21) Application number: 20215080.1
(22) Date of filing: 17.12.2020
(51) Int. Cl.: G07C 9/00, G07C 9/10, H04L 12/403, H04J 3/06, H04L 7/00

(54) **CONTROL SYSTEM FOR ACCESS POINT DEVICES**
STEUERUNGSSYSTEM FÜR ZUGANGSPUNKTVORRICHTUNGEN
SYSTÈME DE COMMANDE POUR DISPOSITIFS DE POINT D'ACCÈS

(43) Date of publication of application: 22.06.2022
(73) Proprietor: CAME S.p.A., 31030 Dosson di Casier (TV) (IT)
(72) Inventor: TOMAELLO, Andrea, 30037 SCORZE (IT); LAZZARINI, Diego, 35035 MESTRINO (IT)
(74) Representative: Savi, Massimiliano

(56) References cited:
- EP-A2- 2 119 125
- EP-B1- 2 119 125
- US-A1- 2005 055 469
- US-A1- 2015 003 443

## Description

### FIELD OF THE INVENTION

The invention relates to the sector of automation of doors, gates, and similar barrier devices typically used to close access points, e.g. access gates to garages or, more generally, to delimited areas.

### PRIOR ART

In control systems of doors, gates, rolling shutters, and similar barrier devices, it is customary to connect the various units which form the system to a controller by means of electrical wires.

In a domestic installation, such units may be, for example, a motor for one leaf of a gate, a motor for the other leaf of the gate, a motor for a garage door, a radio receiver for receiving the requests to open/close the gate and the door from a remote control, key selectors and/or control keypads for operating the motors, safety systems, e.g. photocells or sensitive edges, light and/or acoustic signaling devices.

It is known to use bus configurations in which all devices are connected in parallel to the controller through the use of a single pair of conductors to reduce the number of wires to be used and thus to simplify the wiring. An example of a bus system is described in U.S. Patent 7091687.

In this system, the communication between the controller and the peripheral devices takes place using the so-called master/slave technique, in which the master is the controller and the slaves are the peripheral devices. This technique provides that any command or status information traveling on the bus is handled by the controller. Indeed, the peripheral devices can occupy the bus only following a request sent by the controller itself, in the form of a query or command, to each device. If it is a command, e.g. such as a command to actuate a motor to open a gate, the device will respond by confirming, i.e. with an acknowledge signal. If it is a request for status, e.g. concerning the possible presence of an obstacle that interrupts the light beam of a photocell, the device will respond by sending the requested status information directly. Such a communication protocol thus requires each peripheral device to be associated with an address that the controller uses to identify the recipient of its message, either commands or status requests, and that no device can speak unless it is addressed by the controller.

When there are many devices, such a communication system creates a great deal of traffic on the bus with performance reductions in terms of both speed and reliability.

To overcome this drawback, there are bus systems in which instead of following the querying of each device, the master/slave communicates a status by sending a request valid for all devices to which each device responds in separate time windows to avoid clashes on the bus and allow the master to recognize the device that provided such a response. In practice, the address function is replaced by assigning predefined response time delays for each device relative to the status request. An example of a bus system is described in EP 2119125.

Although it performs its function very well, even in this system the peripheral devices can only send data on the bus after a request from the master, which is common for all devices in this case.

Such a request is generally a pulse with a given coding that the devices recognize as a status request or as a command acknowledgment and from which they calculate a response time, different for each device. Any jitter on the pulse sent by the master thus affects the time windows in which the peripheral devices are allowed to talk. Furthermore, if for any reason the pulse is either not generated or correctly transmitted on the bus, i.e. the communication between master and devices fails, and the communication between devices and master also fails. This prevents the communication of possible alarm states coming from photocell or sensitive edge safety devices which require a prompt intervention on the movement of a barrier, for example.

US 2005/055469 A1 and US 2015/003443 A1 are further prior art.

### GENERAL DESCRIPTION OF THE INVENTION

The present invention is defined by the appended independent claims. Preferred embodiments are set forth in the dependent claims.

It is the object of the present invention to provide a control system for access point devices capable of providing greater noise immunity and ensuring operation even in the temporary absence of communication with the master.

The invention achieves the object with a control system for access point devices, such as gates, doors, mobile barriers, and the like, comprising:
a communication bus;
a control unit interfaced with the communication bus for transmitting/receiving digital information, which control unit comprises a clock device capable of measuring time;
a plurality of peripheral units interfaced with the communication bus to transmit/receive digital information to/from the control unit.

The peripheral units each comprise a clock device capable of independently measuring the time starting from an initial time reference to define characteristic time windows for each peripheral unit to be used to send signals on the bus and/or enable commands, the control unit being configured to send a synchronism signal to the peripheral units so that all the peripheral units have the same initial time reference, said synchronism signal being asynchronous and not connected to the intervals defined for the transmission on the bus.

In this manner, the communication between peripheral devices and the control unit can take place in the absence of a request from the controller itself as the peripheral devices are configured to send data on the bus at mutually different absolute time instants. Such instants are established during system installation so that by knowing such absolute time instants the controller can always trace back to the source of given data present on the bus. From time to time, the controller synchronizes the clock devices of the peripheral units to ensure that any changes in the time counts of each unit will not affect the communication protocol.

In this manner, the peripheral units can operate in broadcast mode, i.e. send states in the absence of any request from the control unit, increasing the reliability and safety of the system as a whole.

The characteristic time window of a peripheral unit is different from the characteristic time window of another peripheral unit of the plurality to avoid collisions on the bus. For this purpose, the characteristic time windows of all the peripheral units have the same duration but may have a different offset from the initial time reference.

The control unit advantageously comprises a memory element for storing the characteristic time windows of each peripheral unit to be able to associate the information received in a broadcast on the bus with the peripheral unit that transmitted it based on the instant of time since said information was received as calculated by the clock device of the central unit.

Particularly advantageous is a system configuration in which at least one of the peripheral units is a photocell safety device comprising an optical transmitter and an optical receiver. The safety device determines that when a light beam sent from the optical transmitter to the optical receiver is interrupted by an obstacle and correspondingly transmits a status signal of the optical reception to the control unit. By making sure that the optical transmitter of the safety device transmits a light beam (or infrared or radio depending on the type of device used) only in the characteristic time window of the device (e.g. the same in which the receiver is enabled to transmit status information on the bus), possible errors due to interference between adjacent photocell devices are avoided. Indeed, each safety device is configured to transmit the optical beam in different characteristic windows so that the receiver of one optical transmitter/receiver pair cannot receive light signals from optical transmitters of other pairs.

According to another aspect, the invention relates to a method for managing bus communication between peripheral devices and a controller in control systems for access point devices, such as gates, doors, mobile barriers, and the like, wherein the method comprises:
assigning the same time-counting device to each device and the controller so that each device and the controller have the same absolute time references;
defining characteristic time windows for each peripheral device to be used to send signals on the bus and/or enable commands;
providing a synchronism signal to be sent by the controller to the peripheral devices so that all the peripheral devices have the same initial time reference, said synchronism signal being asynchronous and independent from the intervals defined for transmission on the bus;
providing that the controller discriminates the origin of the signals on the bus based on the time of reception of such commands relative to the time window characteristic of each device.

When there is a plurality of photocell devices comprising pairs of optical transmitters/receivers, the method advantageously provides the step of enabling the transmission of each transmitter in only the time window associated with the device for transmitting status information on the bus to the controller. In this manner, any possible interference is avoided between adjacent devices, increasing the reliability and safety of the system.

### BRIEF DESCRIPTION OF THE FIGURES

Further objects, features, and advantages of the present invention will be more apparent from the following detailed description provided by way of nonlimiting example and illustrated in the accompanying figures, in which:
Fig. 1 shows an exemplary diagram of a system for controlling the movement of a movable barrier according to an embodiment of the invention.
Fig. 2 shows the timing of a first bus communication system according to the prior art.
Fig. 3 shows the timing of a second bus communication system according to the prior art.
Fig. 4 shows the timing of a bus communication system according to an embodiment of the invention.
The following description of exemplifying embodiments refers to the attached drawings. The same reference numbers in the various drawings identify the same elements or similar elements. The following detailed description does not limit the invention. The scope of the invention is defined by the appended claims.

### DETAILED DESCRIPTION OF THE INVENTION

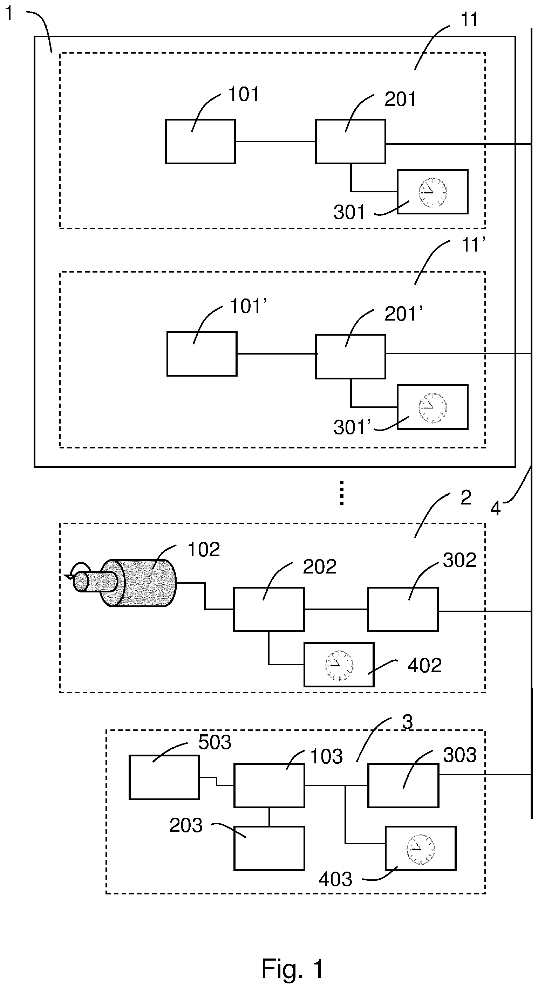

With reference to fig. 1, a system for controlling the movement of a movable barrier, such as a gate, a barrier, a door, and the like comprises a bus 4 to which a barrier opening/closing movement module 2, a central control module 3, and a photocell safety device 1 are connected.

The photocell device 1 comprises an optical transmitter 101 and a corresponding optical receiver 101' coupled so that the receiver 101' can detect when the light beam emitted by the transmitter 101 does not reach the receiver 101', e.g. due to the presence of an obstacle between the two. The photocell devices are used to signal the presence of a vehicle or person in the immediate vicinity of the barrier to allow the system to act safely. The optical transmitter 101 and the optical receiver 101' typically belong to separate devices 11, 11' each having electronics 201, 201' of the interface towards the bus 4.

The moving module 2 comprising a motor 102, a motor control device 202, and a port 302 for receiving a barrier movement command via the bus 4.

The central control module 3 comprises a central unit 103, an input 203, and an interface port 303 towards the bus 4.

The central unit 103 is configured to read barrier movement commands from the input 203 and correspondingly send actuation signals to the motor control device 202 via the bus 4 as well as read the status of the photocell safety device 1 to promptly interrupt the movement of the barrier if the presence of a vehicle is detected, e.g. by obscuring the passage of the light beam from the photo-transmitter 101 to the photo-receiver 101'.

The communication system 4 may advantageously be a bus communication system with a master/slave type protocol with the central unit 103 being the master, the motor control device 2, and the photocell devices 11, 11' being corresponding slaves that receive commands from, and send states to, said master. There can be further slave devices interfaced with the bus, e.g. such as further photocell safety devices, sensitive edge devices, foot-operated presence detectors, radar presence detectors, signaling devices, and other devices typical in this type of system. The same input 203 of the central unit 3 may be flanked or replaced by a slave type input device interfaced with the central unit 3 through the bus 4, e.g. such as a key switch, a control keypad, a remote control receiver, and similar devices.

The bus system can advantageously exploit the communication through only two electrical wires according to the teachings of US 7091687.

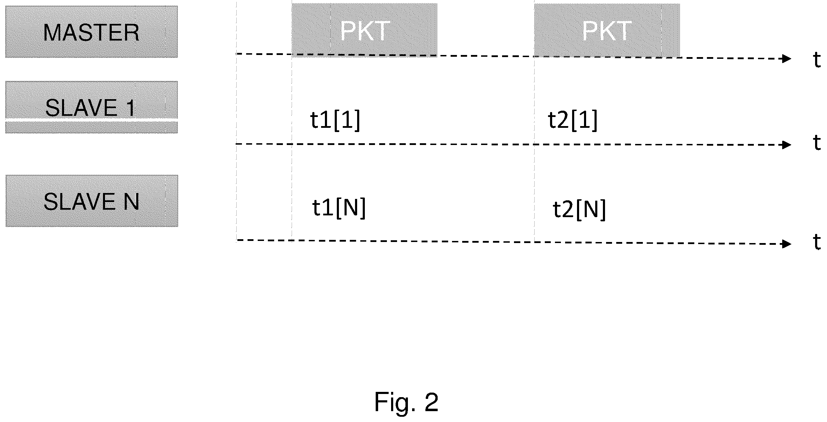

In the systems according to the prior art, the master sends commands, e.g. to the movement module 2, or status requests, e.g. to the photocell module 1, through messages having a coding which univocally identifies the peripheral device receiving the communication. In case of a command, the device to which the command is sent will execute the command and send an acknowledge signal to the master accordingly. In the case of a status request, the device to which this request is addressed will directly respond by sending the requested status. The photocell devices, for example, when queried, will signal the master whether the optical coupling between each transmitter/receiver pair is interrupted or intact. Fig. 2 shows such a communication protocol in which PKT denotes the packet sent by the master at various instants ti to each of the n devices.

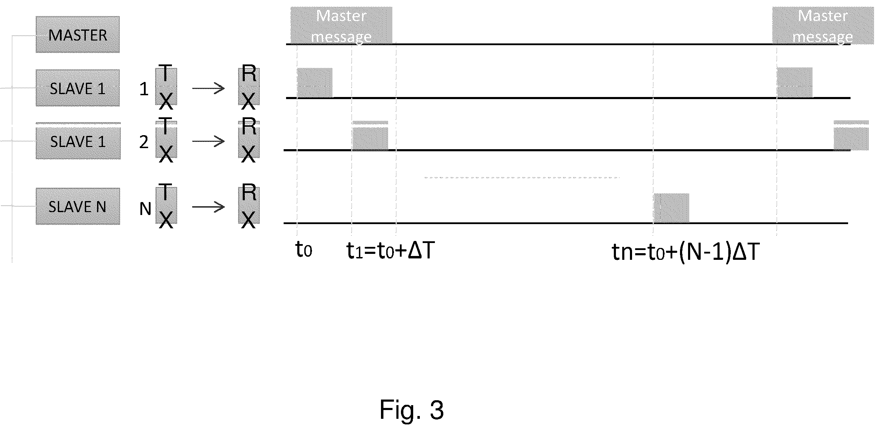

Fig. 3 shows an alternative communication protocol in which the status request message from the master is one for all slaves according to the teachings of EP 2119125. The drawback of needing to send a status request to each device is avoided in this manner. The master can recognize which device the message is coming from because each device transmits in a predefined time window starting from the reception of the status request message. By assigning different time windows to each device during system installation, the master can recognize the origin of the message. In the figure, the windows all have the same duration equal to ΔT and a time delay equal to tᵢ=t₀+(i-1)ΔT relative to the message sent by the master at time t₀, where i denotes the i-th device.

The present invention exploits a similar time-domain multiplexing system to distinguish the origin of status messages but using absolute references, i.e., by having slaves communicate at predetermined times and in predetermined windows in a broadcast mode without waiting for a single or cumulative data request from the master.

To this end, both the control unit 3 and the peripheral units 1 comprise a clock device 301, 301', 402, 403 capable of independently measuring time from an initial time reference to define characteristic time windows for each peripheral unit to be used to send signals on the bus and/or enable commands.

The control unit 3 is configured to send, from time to time, without a predefined time sequence, and in any case in a manner unrelated to the possible sending of commands or status requests, to the peripheral units 11, 11', 2 a synchronism signal so that all the peripheral units have the same initial time reference.

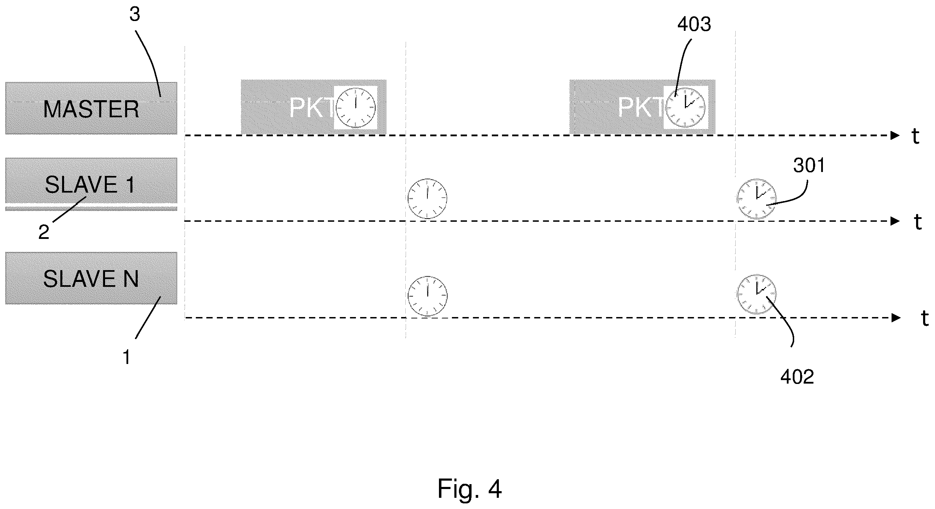

Fig. 4 shows the typical timing of the system according to an embodiment of the invention. Each peripheral device 11, 11', 2 is provided with a clock device 301, 301', 402 that the electronics of the device used to determine the timing of the signals to be sent on the bus to the central unit 3. In practice, the sending of messages on the communication bus 4 is not affected by any request from the master. In practice, the timing of the signals is entrusted to clock devices 403, 301, 301', 402 which calculate the time in an absolute manner relative to a synchronization instant which, from time to time, the master sends independently from the request of data sending on the bus to allow the correction of possible time misalignments which may arise during the operation of the system.

Since the timing is entrusted to an absolute, possibly resynchronized, time reference, the separation of the messages sent by each device on the bus can take place in broadcast mode or when necessary as long as the device speaks only in the time window assigned to it in the configuration of the system to allow the central unit to discriminate the origin of messages arriving on the bus.

The operation of photocell devices, e.g. infrared (IR) photocell devices, based on the principle described above is shown below.

If n pairs of IR photocells are connected on the bus (e.g. 8), the receiving photocell i must know when the transmitting photocell i transmits the IR burst, to be sure that the signal it receives at IR level is that of the paired photocell and not of another one.

To make this possible, the master and the photocells are provided with a timer that runs at the same speed. The master occasionally distributes the value of its timer counter to ensure that all the devices are indeed synchronized to the same time value. This means that at the same absolute time, all the timers of the photocells and the master have the same value.

Assuming that the timer consists of a 16-bit counter with a granularity of 1 µs, it will count from value 0 to value 65535 and then start again from 0.

If the TX photocells must transmit, e.g. every 24576 ms (submultiple of 65536), and the photocell with the next index must transmit after 2.5 ms from the previous one, it is possible, for example, to make the photocell with index 0 transmit with offset 0 and the one with index i transmit with offset (2.5 ms x i). In this manner, the RX photocell knows exactly when the TX photocell with the same index must transmit and thus determines whether the IR burst is to be considered or not.

The following table summarizes the described example.

| # Counting | Offset in ms | Photocell index |
|---|---|---|
| 0 | 0 | 0 |
| 2500 | 2.5 | 1 |
| 5000 | 5 | 2 |
| 7500 | 7.5 | 3 |
| 10000 | 10 | 4 |
| 12500 | 12.5 | 5 |
| 15000 | 15 | 6 |
| 17500 | 17.5 | 7 |
| 24576 | 24.576 | 0 |
| 27076 | 27.076 | 1 |
| 29576 | 29.576 | 2 |
| 32076 | 32.076 | 3 |
| 34576 | 34.576 | 4 |
| 37076 | 37.076 | 5 |
| 39576 | 39.576 | 6 |
| 42076 | 42.076 | 7 |
| 49152 | 49.152 | 0 |
| .. | .. | .. |

In this manner, the transmission on the bus in broadcast mode is allowed and dangerous interference between signals from different photocells are also avoided.

For the central unit 3 to be able to establish the time windows associated with each device 1, 2, during system configuration, the number of peripheral units and the relative absolute transmission delay is stored in a memory element 503 associated with the central unit 3, i.e. in practice, in the case of the previous example, the offset values in ms associated with each of the 8 units.

To this end, the invention further relates to a method for configuring a control system for access point devices, such as gates, doors, mobile barriers, and the like of the type described above, which method comprises assigning a fixed enabling time window relative to an absolute time reference to each device and storing said time window in a memory device associated with the central unit so that said central unit can determine from which peripheral device the messages present on the bus originated.

## Claims

1. A control system for access point devices, such as gates, doors, mobile barriers, and the like, comprising:
a communication bus (4);
a control unit (3) interfaced with the communication bus (4) for transmitting/receiving digital information, which control unit (3) comprises a clock device (403) capable of measuring time;
a plurality of peripheral units (1, 2) interfaced with the communication bus (4) to transmit/receive digital information to/from the control unit (3),
**characterized in that** said peripheral units (1, 2) each comprise a clock device (301, 301', 402) capable of independently measuring the time starting from an initial time reference to define characteristic time windows for each peripheral unit to be used to send signals on the bus and/or enable commands, the control unit (3) being configured to send a synchronism signal to the peripheral units (1, 2) so that all the peripheral units have the same initial time reference, and to establish said time windows during system installation.

2. A system according to claim 1, wherein the characteristic time window of a peripheral unit (1, 2) is different from the characteristic time window of another peripheral unit of the plurality.

3. A system according to claim 1 or 2, wherein the characteristic time windows of all the peripheral units (1, 2) have the same duration but different offset relative to the initial time reference.

4. A system according to one or more of the preceding claims, wherein the characteristic time windows of each peripheral unit are offset in time so as not to overlap with one another.

5. A system according to one or more of the preceding claims, wherein the control unit (3) comprises a memory element (503) for storing the characteristic time windows of each peripheral unit (1, 2) to be able to associate the information received in a broadcast on the bus with the peripheral unit (1, 2), which transmitted it based on the instant of time since said information was received as calculated by the clock device of the control unit.

6. A system according to one or more of the preceding claims, wherein the communication protocol on the communication bus is of the master/slave type with the control unit (3) being the master and the peripheral units (1, 2) being the slaves.

7. A system according to one or more of the preceding claims, wherein at least one of the peripheral units (1) is a photocell safety device comprising an optical transmitter (101) and an optical receiver (101'), the safety device being adapted to determine when a light beam sent by the optical transmitter (101) to the optical receiver (101') is interrupted due to the presence of an obstacle and correspondingly transmitting an optical reception status signal to the control unit (3), wherein the optical transmitter (101) of the safety device (1) is configured to transmit a light beam only in the characteristic time window of the safety device (1).

8. A system according to claim 7, wherein a plurality of photocell safety devices (1) is present, each of which is configured to transmit the optical beam in different characteristic windows so that the receiver (101') of one optical transmitter/receiver pair cannot receive light signals from optical transmitters of other pairs.

9. A system according to claim 8, wherein the optical receiver (101') of each transmitter/optical receiver pair (1) is configured to transmit the optical reception status information to the control unit (3) in the same device characteristic window or a subinterval of said window.

10. A method for configuring a control system for access point devices, such as gates, doors, mobile barriers, and the like, according to one or more of the preceding claims, **characterized in that** it comprises assigning a fixed enabling time window relative to an absolute time reference to each device and storing said time window in a memory device associated with the control unit so that said control unit can determine from which peripheral device the messages present on the bus originated.

11. A method for managing bus communication between peripheral devices and a controller in control systems for access point devices, such as gates, doors, mobile barriers, and the like, wherein the method comprises:
assigning a time-counting device to each device and the controller so that each device and the controller have the same absolute time references;
defining characteristic time windows for each peripheral device to be used to send signals on the bus and/or enable commands;
providing a synchronism signal to be sent by the controller to the peripheral devices so that all the peripheral devices have the same initial time reference, and to establish said time windows during system installation;
providing that the controller discriminates the origin of the signals on the bus based on the time of reception of such commands relative to the time interval characteristic of each device.

12. A method according to claim 11, wherein the step is provided of controlling a plurality of photocell devices comprising pairs of optical transmitters/receivers enabling the transmission of each transmitter only in the time window associated with the device for transmitting status information on the bus to the controller.

## Patentansprüche

1. Steuerungssystem für Zugangspunktvorrichtungen, wie Tore, Türen, mobile Schranken und dergleichen, umfassend:
einen Kommunikationsbus (4);
eine Steuerungseinheit (3), die mit dem Kommunikationsbus (4) zum Senden/Empfangen digitaler Informationen verbunden ist, wobei die Steuerungseinheit (3) eine Zeitgebervorrichtung (403) umfasst, die zum Messen der Zeit in der Lage ist;
eine Vielzahl von Peripherieeinheiten (1, 2), die mit dem Kommunikationsbus (4) verbunden sind, um digitale Informationen an die Steuerungseinheit (3) zu senden und von ihr zu empfangen, **dadurch gekennzeichnet, dass** die Peripherieeinheiten (1, 2) jeweils eine Zeitgebervorrichtung (301, 301', 402) umfassen, die zum unabhängigen Messen der Zeit ausgehend von einer Anfangszeitreferenz in der Lage sind, um charakteristische Zeitfenster für jede Peripherieeinheit zu definieren, die zum Senden von Signalen über den Bus und/oder zum Aktivieren von Befehlen verwendet werden, wobei die Steuerungseinheit (3) dazu konfiguriert ist, ein Synchronisationssignal an die Peripherieeinheiten (1, 2) zu senden, sodass alle Peripherieeinheiten dieselbe Anfangszeitreferenz haben, und die Zeitfenster während der Systeminstallation festzulegen.

2. System nach Anspruch 1, wobei sich das charakteristische Zeitfenster einer Peripherieeinheit (1, 2) von dem charakteristischen Zeitfenster einer anderen Peripherieeinheit der Vielzahl unterscheidet.

3. System nach Anspruch 1 oder 2, wobei die charakteristischen Zeitfenster aller Peripherieeinheiten (1, 2) die gleiche Dauer, aber einen unterschiedlichen zeitlichen Versatz in Bezug auf die Anfangszeitreferenz aufweisen.

4. System nach einem oder mehreren der vorhergehenden Ansprüche, wobei die charakteristischen Zeitfenster jeder Peripherieeinheit zeitlich versetzt sind, sodass sie sich nicht überlappen.

5. System nach einem oder mehreren der vorhergehenden Ansprüche, wobei die Steuerungseinheit (3) ein Speicherelement (503) zum Speichern der charakteristischen Zeitfenster jeder Peripherieeinheit (1, 2) umfasst, um in der Lage zu sein, die in einer Übertragung auf dem Bus empfangenen Informationen der Peripherieeinheit (1, 2) zuordnen zu können, die sie gesendet hat, basierend auf dem Zeitpunkt seit dem Empfang der Informationen, wie er von der Zeitgebervorrichtung der Steuerungseinheit berechnet wurde.

6. System nach einem oder mehreren der vorhergehenden Ansprüche, wobei das Kommunikationsprotokoll auf dem Kommunikationsbus vom Master/Slave-Typ ist, wobei die Steuerungseinheit (3) der Master ist und die Peripherieeinheiten (1, 2) die Slaves sind.

7. System nach einem oder mehreren der vorhergehenden Ansprüche, wobei mindestens eine der Peripherieeinheiten (1) eine Fotozellen-Sicherheitsvorrichtung ist, die einen optischen Sender (101) und einen optischen Empfänger (101') umfasst, wobei die Sicherheitsvorrichtung dazu ausgelegt ist, zu bestimmen, wann ein vom optischen Sender (101) zu dem optischen Empfänger (101') gesendeter Lichtstrahl aufgrund des Vorhandenseins eines Hindernisses unterbrochen wird, und entsprechend ein optisches Empfangsstatussignal an die Steuerungseinheit (3) zu senden, wobei der optische Sender (101) der Sicherheitsvorrichtung (1) dazu konfiguriert ist, einen Lichtstrahl nur in dem charakteristischen Zeitfenster der Sicherheitsvorrichtung (1) zu senden.

8. System nach Anspruch 7, wobei eine Vielzahl von Fotozellen-Sicherheitsvorrichtungen (1) vorhanden ist, von denen jede dazu konfiguriert ist, den optischen Strahl in unterschiedlichen charakteristischen Fenstern zu senden, sodass der Empfänger (101') eines optischen Sender-/Empfängerpaares keine Lichtsignale von optischen Sendern anderer Paare empfangen kann.

9. System nach Anspruch 8, wobei der optische Empfänger (101') jedes optischen Sender-/Empfängerpaares (1) dazu konfiguriert ist, die optische Empfangsstatusinformation an die Steuerungseinheit (3) im gleichen charakteristischen Vorrichtungsfenster oder einem Teilintervall dieses Fensters zu senden.

10. Verfahren zum Konfigurieren eines Steuerungssystems für Zugangspunktvorrichtungen, wie Tore, Türen, mobile Barrieren und dergleichen, nach einem oder mehreren der vorhergehenden Ansprüche, **dadurch gekennzeichnet, dass** es das Zuweisen eines festen Aktivierungszeitfensters in Bezug auf eine absolute Zeitreferenz zu jeder Vorrichtung und das Speichern des Zeitfensters in einer der Steuerungseinheit zugeordneten Speichervorrichtung umfasst, so dass die Steuerungseinheit bestimmen kann, von welcher Peripherievorrichtung die auf dem Bus vorhandenen Nachrichten stammen.

11. Verfahren zum Verwalten der Buskommunikation zwischen Peripherievorrichtungen und einer Steuerung in Steuerungssystemen für Zugangspunktvorrichtungen, wie Tore, Türen, mobile Barrieren und dergleichen, wobei das Verfahren umfasst:
Zuweisen einer Zeitzählvorrichtung zu jeder Vorrichtung und der Steuerung, so dass jede Vorrichtung und die Steuerung die gleichen absoluten Zeitreferenzen haben;
Definieren charakteristischer Zeitfenster für jede Peripherievorrichtung, die zum Senden von Signalen auf dem Bus und/oder zum Aktivieren von Befehlen verwendet werden sollen;
Bereitstellen eines Synchronisationssignals, das von der Steuerung an die Peripherievorrichtungen gesendet wird, so dass alle Peripherievorrichtungen dieselbe Anfangszeitreferenz haben, und zum Festlegen der Zeitfenster während der Systeminstallation;
Vorsehen, dass die Steuerung die Herkunft der Signale auf dem Bus basierend auf dem Empfangszeitpunkt solcher Befehle in Bezug auf das charakteristische Zeitintervall für jede Vorrichtung unterscheidet.

12. Verfahren nach Anspruch 11, wobei der Schritt des Steuerns einer Vielzahl von Fotozellenvorrichtungen vorgesehen ist, die Paare von optischen Sendern/Empfängern umfassen, die die Übertragung jedes Senders nur in dem Zeitfenster ermöglichen, das der Vorrichtung zum Senden von Statusinformationen auf dem Bus an die Steuerung zugeordnet ist.

## Revendications

1. Système de commande pour des dispositifs de point d'accès, tels que des portails, des portes, des barrières mobiles et similaires, comprenant :
un bus de communication (4) ;
une unité de commande (3) interfacée avec le bus de communication (4) pour transmettre/recevoir des informations numériques, laquelle unité de commande (3) comprend un dispositif d'horloge (403) capable de mesurer le temps ;
une pluralité d'unités périphériques (1, 2) interfacées avec le bus de communication (4) pour transmettre/recevoir des informations numériques vers/depuis l'unité de commande (3), **caractérisé en ce que** lesdites unités périphériques (1, 2) comprennent chacune un dispositif d'horloge (301, 301', 402) capable de mesurer indépendamment le temps à partir d'une référence temporelle initiale pour définir des fenêtres temporelles caractéristiques pour chaque unité périphérique à utiliser pour envoyer des signaux sur le bus et/ou activer des commandes, l'unité de commande (3) étant configurée pour envoyer un signal de synchronisation aux unités périphériques (1, 2) de sorte que toutes les unités périphériques aient la même référence temporelle initiale, et pour établir lesdites fenêtres temporelles pendant l'installation de système.

2. Système selon la revendication 1, dans lequel la fenêtre temporelle caractéristique d'une unité périphérique (1, 2) est différente de la fenêtre temporelle caractéristique d'une autre unité périphérique de la pluralité.

3. Système selon la revendication 1 ou 2, dans lequel les fenêtres temporelles caractéristiques de toutes les unités périphériques (1, 2) ont la même durée mais un décalage différent par rapport à la référence temporelle initiale.

4. Système selon une ou plusieurs des revendications précédentes, dans lequel les fenêtres temporelles caractéristiques de chaque unité périphérique sont décalées dans le temps afin de ne pas se chevaucher les unes les autres.

5. Système selon une ou plusieurs des revendications précédentes, dans lequel l'unité de commande (3) comprend un élément de mémoire (503) pour stocker les fenêtres temporelles caractéristiques de chaque unité périphérique (1, 2) afin de pouvoir associer les informations reçues dans une diffusion sur le bus avec l'unité périphérique (1, 2) qui les a transmises sur la base de l'instant depuis que lesdites informations ont été reçues telles que calculées par le dispositif d'horloge de l'unité de commande.

6. Système selon une ou plusieurs des revendications précédentes, dans lequel le protocole de communication sur le bus de communication est du type maître/esclave, l'unité de commande (3) étant le maître et les unités périphériques (1, 2) étant les esclaves.

7. Système selon une ou plusieurs des revendications précédentes, dans lequel au moins l'une des unités périphériques (1) est un dispositif de sécurité à cellule photoélectrique comprenant un émetteur optique (101) et un récepteur optique (101'), le dispositif de sécurité étant adapté pour déterminer quand un faisceau lumineux envoyé par l'émetteur optique (101) au récepteur optique (101') est interrompu en raison de la présence d'un obstacle et pour transmettre de manière correspondante un signal d'état de réception optique à l'unité de commande (3), dans lequel l'émetteur optique (101) du dispositif de sécurité (1) est configuré pour transmettre un faisceau lumineux uniquement dans la fenêtre temporelle caractéristique du dispositif de sécurité (1).

8. Système selon la revendication 7, dans lequel une pluralité de dispositifs de sécurité à cellules photoélectriques (1) est présente, chacun étant configuré pour transmettre le faisceau optique dans différentes fenêtres caractéristiques de sorte que le récepteur (101') d'une paire émetteur/récepteur optique ne peut pas recevoir de signaux lumineux provenant d'émetteurs optiques d'autres paires.

9. Système selon la revendication 8, dans lequel le récepteur optique (101') de chaque paire émetteur/récepteur optique (1) est configuré pour transmettre les informations d'état de réception optique à l'unité de commande (3) dans la même fenêtre de caractéristiques de dispositif ou un sous-intervalle de ladite fenêtre.

10. Procédé pour configurer un système de commande pour des dispositifs de point d'accès, tels que des portails, des portes, des barrières mobiles et similaires, selon une ou plusieurs des revendications précédentes, **caractérisé en ce qu'**il comprend l'attribution d'une fenêtre temporelle d'activation fixe par rapport à une référence temporelle absolue à chaque dispositif et le stockage de ladite fenêtre temporelle dans un dispositif de mémoire associé à l'unité de commande de sorte que ladite unité de commande puisse déterminer à partir de quel dispositif périphérique les messages présents sur le bus proviennent.

11. Procédé de gestion de la communication par bus entre des dispositifs périphériques et un contrôleur dans des systèmes de commande pour des dispositifs de point d'accès, tels que des portails, des portes, des barrières mobiles et similaires, dans lequel le procédé comprend :
attribuer un dispositif de comptage du temps à chaque dispositif et au contrôleur afin que chaque dispositif et le contrôleur aient les mêmes références temporelles absolues ;
définir des fenêtres temporelles caractéristiques pour chaque dispositif périphérique à utiliser pour envoyer des signaux sur le bus et/ou activer des commandes ;
fournir un signal de synchronisation à envoyer par le contrôleur aux dispositifs périphériques afin que tous les dispositifs périphériques aient la même référence temporelle initiale, et établir lesdites fenêtres temporelles pendant l'installation du système ;
à condition que le contrôleur discrimine l'origine des signaux sur le bus en fonction de l'heure de réception de ces commandes par rapport à la caractéristique d'intervalle de temps de chaque dispositif.

12. Procédé selon la revendication 11, dans lequel l'étape est prévue pour commander une pluralité de dispositifs à cellules photoélectriques comprenant des paires d'émetteurs/récepteurs optiques permettant la transmission de chaque émetteur uniquement dans la fenêtre temporelle associée au dispositif pour transmettre des informations d'état sur le bus au contrôleur.
